# NEUE EUROPÄISCHE PATENTSCHRIFT

(11) **EP 2 473 545 B3**
(45) Veröffentlichungstag dieser Patentschrift: **31.08.2016**
(45) Hinweis auf die Patenterteilung: 03.07.2013
(21) Anmeldenummer: 10717083.9
(22) Anmeldetag: 13.04.2010
(51) Int. Cl.: C08G 65/00

(54) **ISOCYANATFREIE SILANVERNETZENDE ZUSAMMENSETZUNGEN**
ISOCYANATE-FREE SILANE-CROSSLINKING COMPOUNDS
COMPOSITIONS EXEMPTES D'ISOCYANATE À RÉTICULATION SILANE

(30) Priorität: 04.09.2009 DE 102009029200
(43) Veröffentlichungstag der Anmeldung: 11.07.2012
(73) Patentinhaber: Wacker Chemie AG, 81737 München (DE)
(72) Erfinder: STANJEK, Volker, 84539 Ampfing (DE); BACHMEIER, Bernd-Josef, 84533 Haiming (DE); BAUER, Andreas, 84375 Kirchdorf (DE)
(74) Vertreter: Fritz, Helmut
(86) Internationale Anmeldenummer: PCT/EP2010/054811
(87) Internationale Veröffentlichungsnummer: WO 2011/026658

(56) Entgegenhaltungen:
- EP-A1- 0 931 800
- WO-A1-01/12693
- WO-A1-02/066532
- WO-A1-03/014226
- WO-A1-03/018658
- WO-A1-2005/000931
- DE-A1- 19 923 300

## Beschreibung

Die Erfindung betrifft einkomponentige silanvernetzende Zusammensetzungen, die als Klebstoffe mit hoher Zugscherfestigkeit und hoher Härtungsgeschwindigkeit eingesetzt werden.

Zur Durchführung von Holzverklebungen sind u.a. Holzleime bekannt, die üblicherweise auf Basis von Polyvinylacetatdispersionen formuliert sind. Diese zeigen zwar eine gute Adhäsion auf Holz, ihre Abbindegeschwindigkeit, d.h. die bis zur Ausbildung einer belastbaren Verklebung verstreichende Zeit, ist jedoch sehr lang, so dass eine andauernde mechanische Fixierung der zu verklebenden Werkstücke in der Regel unverzichtbar ist. Darüber hinaus ist der Einsatz dieses Klebstofftyps problematisch, wenn die Verklebung Feuchtigkeit ausgesetzt wird, da die Holzleime üblicherweise nur eine begrenzte Beständigkeit gegenüber Wasser aufweisen.

Im Falle stark beanspruchter Holzkonstruktionen, bei denen hohe Anforderungen an die mechanische Festigkeit der Bauteile gestellt werden und die Verbundfestigkeit auch nach vielen Jahren unter Witterungseinflüssen noch ausreichend hoch sein soll, sind derartige Holzleime meist nicht geeignet.

Hier werden typischerweise isocyanatvernetzende PU-Klebstoffe eingesetzt. Diese enthalten üblicherweise aromatische Polyisocyanate. Derartige Systeme härten durch eine Reaktion der Isocyanatgruppen mit (Luft-)Feuchtigkeit aus.

Da PU-Klebstoffe übereine chemische Vernetzungsreaktion härten und sich auch chemisch an Holz als Substrat anbinden können, zeigen sie deutlich bessere mechanische Eigenschaften und sind auch wesentlich beständiger gegenüber äußeren (Witterungs-) Einflüssen wie Feuchtigkeit oder direkten Wasserkontakt.

Die generelle Leistungsfähigkeit von Klebstoffen wird durch die Erfüllung von Normen, wie beispielsweise die DIN EN 204, Beanspruchungsgruppe D1 - D4 festgestellt. Diese Normen können in der Regel von isocyanatvernetzenden Klebstoffen erfüllt werden.

Dennoch besitzen auch isocyanatvernetzende Klebstoffe z.T. massive systemimmanente Nachteile. Z.B. besitzen einkomponentige PU-Klebstoffsysteme in der Regel nur moderate Härtungsgeschwindigkeiten. Zwar kann die Isocyanatvernetzung prinzipiell durch eine aggressive Katalyse stark beschleunigt werden. Aber da eine derartige Katalyse grundsätzlich auch unerwünschte Nebenreaktionen der Isocyanatgruppen katalysieren (z.B. Bildung von Allophanaten, Uretdionen, Isocyanuraten etc.), weisen die entsprechenden Systeme dann keine hinreichende Lagerstabilität mehr auf.

Ein weiterer Nachteil der isocyanatvernetzenden Klebstoffe ist die sensibilisierende Wirkung, die sämtliche isocyanathaltigen Verbindungen aufweisen. Zudem sind viele monomere Isocyanate giftig oder sogar sehr giftig und/ oder stehen im Verdacht, krebserregend zu sein. Dies ist insofern problematisch, da hier der Endanwender, d.h. der Handwerker oder Do-it-yourself-Anwender nicht nur mit dem ausgehärteten und damit isocyanatfreien und völlig unbedenklichen Produkt, sondern auch mit dem isocyanathaltigen Klebstoff in Kontakt kommt. Beim ungeübten Heimwerker besteht dabei die besondere Gefahr, dass die Produkte gegebenenfalls nicht fachkundig und/oder sachgerecht angewendet werden. Zusätzliche Gefahren gehen hier auch von einer nicht sachgerechten Lagerung, z.B. in Reichweite von Kindern, aus. Beim professionellen Handwerker hingegen ist zwar von einer sachgerechten Anwendung und Lagerung auszugehen. Hier besteht jedoch gegebenenfalls das Problem, dass der "Profi" regelmäßig - gegebenenfalls sogar mehrmals täglich - mit dem isocyanathaltigen Material umgehen muss, was insbesondere ob der o.g. sensibilisierenden Wirkung von Isocyanaten potentiell kritisch ist.

Etwas günstiger sind hier isocyanatvernetzende Klebstoffe, die nur sehr geringe Gehalte an flüchtigen Isocyanaten aufweisen und somit zumindest kennzeichnungsfrei sind. Diese basieren jedoch meist auf aliphatischen Isocyanaten, welche wiederum weniger reaktiv sind. Diese Klebstoffe sind somit für Anwendungen, in denen es auf eine schnelle Abbindung des Klebstoffes ankommt, noch einmal ungünstiger als herkömmliche PU-Klebstoffe.

Eine alternative Härtungstechnologie, die zunehmend Anwendung im Klebstoffbereich findet, ist die Silanvernetzung, bei der alkoxysilanfunktionelle Prepolymere bei Kontakt mit Luftfeuchtigkeit zunächst hydrolysieren und anschließend durch eine Kondensationsreaktion aushärten. Die entsprechenden silanfunktionellen - meist silanterminierten - Prepolymere sind toxikologisch völlig unbedenklich.

Zwar wiesen herkömmliche silanvernetzende Systeme lange Zeit den Nachteil einer relativ geringen Härtungsgeschwindigkeit auf, jedoch wurden in jüngerer Zeit auch hochreaktive Systeme beschrieben, z.B. in EP 1414909 oder in EP 1421129.

Typische silanvernetzende Klebstoffe bestehen in ihrem Rückgrat aus langkettigen Polyethern, mit Molmassen, die meist in der Größenordnung von 10000 Dalton und höher liegen. Gelegentlich werden auch etwas kurzkettigere Polyether - typischerweise mit Molmassen 4000-8000 Dalton - eingesetzt, die mit Diisocyanaten dann zu längeren Einheiten verknüpft werden. Insgesamt werden somit auch hier sehr hochmolekulare Prepolymere erhalten, deren Rückgrat nach wie vor im Wesentlichen aus langkettigen Polyethereinheiten besteht, wobei die Polyetherkette durch einige wenige Urethaneinheiten unterbrochen ist. Derartige Systeme sind beispielsweise in WO 05/000931 beschrieben.

Nachteilig an all diesen gängigen silanvernetzenden Systemen istjedoch eine relativ geringe Zugscherfestigkeit. Daher beschränken sich typische Anwendungen für diesen neuen Klebstofftyp in der Regel auf Bereiche, in denen eher elastische als hochreißfeste Klebstoffe benötigt werden. Klebstoffe, die den europäischen Standard DIN EN 204, Beanspruchungsgruppe D4, erfüllen, sind mit silanvernetzenden Klebstoffen bislang nicht erreichbar.

Gegenstand der Erfindung sind Zusammensetzungen (K), die im Patentanspruch 1 beschrieben sind.

Vorzugsweise sind die Prepolymere (P) dadurch gekennzeichnet, dass sie aus Polyolen (P1), die ausgewählt werden aus Polyetherpolyolen, Polyesterpolyolen oder Mischungen aus verschiedenen Polyether- und/oder Polyesterpolyolen, hergestellt worden sind, wobei die Polyole (P1) bzw. Polyolmischungen (P1) eine mittlere Molmasse von höchstens 2000 Dalton aufweisen.

Besonders bevorzugt weisen die Prepolymere (P) mit Endgruppen der allgemeinen Formel (1) in ihrem Rückgrat neben den Polyether- und/oder Polyestereinheiten (E) auch noch zusätzliche Urethaneinheiten auf.

Des weiteren sind die Prepolymere (P) vorzugsweise dadurch gekennzeichnet, dass sie neben den Silantermini der allgemeinen Formel (1) auch Termini der allgemeinen Formel (3)

L²-R⁵ (3),

besitzen, wobei
- R⁵: einen unsubstituierten oder halogensubstuierten linearen, verzweigten oder cyclischen Alkyl-, Alkenyl oder Arylalkylrest mit mindestens 7 Kohlenstoffatomen bedeuten und
- L²: dieselbe Bedeutung aufweist wie L¹.

Vorzugsweise sind mindestens 2%, besonders bevorzugt mindestens 4% und vorzugsweise höchstens 40%, insbesondere höchstens 20% aller Kettenenden der Prepolymere (P) mit Gruppen der allgemeinen Formel (3) terminiert.

Der Erfindung liegen vier Entdeckungen zugrunde. So wurde erstens beobachtet, dass der Zusatz von Alkylsilanen (S) mit langkettigen Alkylgruppen zu einer Verbesserung der mechanischen Eigenschaften der resultierenden ausgehärteten Zusammensetzungen (K) führt. Insbesondere verleiht dieser Zusatz den ansonsten relativ spröden Massen überraschenderweise die für eine hohe Zugscherfestigkeit notwendige Elastizität. Ebenso überraschend ist die Tatsache, dass der Zusatz der Silane (S) die u.a. von der DIN EN 204 D4-NormfürHolzklebstoffe geforderte Beständigkeit gegen heißes Wasser massiv verbessert. Zudem wird durch den Zusatz von Alkylsilanen (S) auch die Verarbeitbarkeit der Zusammensetzungen (K) durch Viskositätserniedrigung deutlich verbessert.

Ebenso überraschend war die zweite Entdeckung, nach der Zusammensetzungen (K) mit Prepolymeren (P) auf Basis von kurzkettigen Polyolen (P1) bzw. Polyolmischungen (P1) mit mittleren Molmassen von höchstens 2000 Dalton zu deutlich härteren und zugscherfesteren Materialien aushärten, als Zusammensetzungen mit Prepolymeren auf Basis von langkettigen Polyolen, wie sie für herkömmliche silanvernetzende Kleb- und Dichtstoffe üblicherweise eingesetzt werden.

Drittens wurde entdeckt, das Prepolymere (P), die neben den Silyltermini der allgemeinen Formel (1) auch über Kettentermini der allgemeinen Formel (3) verfügen, überraschenderweise eine deutlich bessere Verträglichkeit mit den Silanen (S) zeigen. Die Verarbeitbarkeit der entsprechenden Massen wird dadurch deutlich verbessert.

Die letzte überraschende Entdeckung war die Tatsache, dass mit Prepolymeren (P), die neben den Silyltermini der allgemeinen Formel (1) auch über Kettentermini der allgemeinen Formel (3) verfügen, Zusammensetzungen (K) erhältlich sind, die nach ihrer Aushärtung gegenüber heißem Wasser deutlich beständiger sind, als ausgehärtete Zusammensetzungen (K), die über keinerlei Kettenenden der allgemeinen Formel (3) verfügen.

In den oben genannten Formeln steht L¹ vorzugsweise für eine zweibindige Bindegruppe ausgewählt aus -O-CO-NH- oder -NH-CO-N(R³)-, wobei letztere besonders bevorzugt wird.

L² steht vorzugsweise für eine zweibindige Bindegruppe ausgewählt aus -NH-CO-N(R³)-, -N(R³)-CO-NH-, -O-CO-NH- und -NH-CO-O, wobei die letztgenannte Gruppe besonders bevorzugt wird.

Bei den Resten R¹ und R² handelt es sich bevorzugt um Kohlenwasserstoffreste mit 1 bis 6 Kohlenstoffatomen, insbesondere um einen Alkylrest mit 1 bis 4 Kohlenstoffatomen, wie Methyl- oder Ethyl-oder Propylreste. R² steht besonders bevorzugt für einen Methylrest, R¹ stellt besonders bevorzugt Methyl- oder Ethylreste dar.

Beim Rest R³ handelt es sich bevorzugt um Wasserstoff oder einen Kohlenwasserstoffrest mit 1 bis 10 Kohlenstoffatomen, besonders bevorzugt um Wasserstoff, einen verzweigten oder unverzweigten Alkylrest mit 1 bis 6 Kohlenstoffatomen, wie Methyl- oder Ethyl-oder Propylreste, einen Cyclohexylrest oder um einen Phenylrest.

y steht vorzugsweise für 1 oder 3, besonders bevorzugt für 1. Der letztgenannte Wert wird deshalb besonders bevorzugt, weil sich die entsprechenden Prepolymere (P), bei denen die Silylgruppe nur durch einen Methylenspacer von einem benachbarten Heteroatom getrennt ist, durch eine besonders hohe Reaktivität gegenüber Luftfeuchtigkeit auszeichnen. Die resultierenden Zusammensetzungen (K) weisen entsprechend kurze Abbindezeiten auf und benötigen zudem in der Regel keine schwermetallhaltigen, insbesondere keine zinnhaltigen Katalysatoren mehr.

Bei dem Rest R⁴ handelt es sich vorzugsweise um einen linearen, oder verzweigten Alkyl- oder Alkenylrest mit mindestens 8 Kohlenstoffatomen, wobei Alkylreste mit mindestens 8 Kohlenstoffatomen, insbesondere Alkylreste mit mindestens 12 Kohlenstoffatomen besonders bevorzugt werden. Vorzugsweise weist R⁴ höchstens 40, besonders bevorzugt höchstens 25 Kohlenstoffatome auf.

Die Variable z steht vorzugsweise für 2 oder 3, besonders bevorzugt für 3.

Bei dem Rest R⁵ handelt es sich vorzugsweise um einen linearen, oder verzweigten Alkyl- oder Alkenylrest mit mindestens 8 Kohlenstoffatomen, wobei lineare Alkylreste mit mindestens 8 Kohlenstoffatomen, insbesondere Alkylreste mit mindestens 10 Kohlenstoffatomen besonders bevorzugt werden. Vorzugsweise weist R⁵ höchstens 30, besonders bevorzugt höchstens 20 Kohlenstoffatome auf.

Bei der Herstellung der Prepolymere (P) wird vorzugsweise von Polyether- und/oder Polyesterpolyolen (P1) mit einer mittleren Molmasse von maximal 2000, insbesondere maximal 1500 Dalton ausgegangen, wobei Polyetherpolyole besonders bevorzugt werden. Ganz besonders bevorzugt werden Polyetherpolyole mit einer mittleren Molmasse von maximal 1000 Dalton. Die bevorzugten Polyethertypen sind Polyethylenglycole und insbesondere Polypropylenglycole. Die Polyole (P1) können verzweigt oder unverzweigt sein. Besonders bevorzugt werden unverzweigte Polyole oder aber Polyole mit einer Verzweigungsstelle. Es können auch Mischungen aus verzweigten und unverzweigten Polyolen eingesetzt werden.

Vorzugsweise werden die Polyole (P1) bei der Herstellung der Prepolymere (P) mit mindestens einer isocyanatfunktionellen Verbindung umgesetzt. Die Herstellung der Prepolymere (P) erfolgt gegebenenfalls in Gegenwart eines Katalysators. Geeignete Katalysatoren sind beispielsweise der bismuthaltige Katalysatoren, wie z.B. der Borchi^{®} Kat 22, Borchi^{®} Kat VP 0243, Borchi^{®} Kat VP 0244 der Fa. Borchers GmbH oder auch diejenigen Verbindungen, die der Zusammensetzung (K) als Härtungskatalysatoren (HK) zugesetzt werden.

Die Synthese der Prepolymere (P) wird vorzugsweise bei Temperaturen von mindestens 0°C, besonders bevorzugt mindestens 60°C und vorzugsweise höchstens 150 °C, insbesondere höchstens 120 °C durchgeführt. Sie kann kontinuierlich oder diskontinuierlich erfolgen.

Bei einer bevorzugten Herstellungsweise der Prepolymere (P) werden die oben genannten Polyole bzw. Polyolmischungen (P1) mit einem Silan (P2) eingesetzt, das ausgewählt wird aus Silanen der allgemeinen Formeln (4)

OCN-(CH₂)_{y}-SiR²₃₋ₓ(OR¹)ₓ (4),

wobei R¹, R² x und y die bei der allgemeinen Formel (1) angegebenen Bedeutungen aufweisen.

Zudem kann als dritte Prepoylmerkomponente auch noch ein Di-oder Polyisocyanat (P3) eingesetzt werden.

Beispiele für gebräuchliche Diisocyanate sind Diisocyanatodiphenylmethan (MDI), sowohl in Form von rohem oder technischem MDI als auch in Form reiner 4,4' bzw. 2,4' Isomeren oder deren Mischungen, Tolylendiisocyanat (TDI) in Form seiner verschiedenen Regioisomere, Diisocyanatonaphthalin (NDI), Isophorondiisocyanat (IPDI) oder auch von Hexamethylendiisocyanat (HDI). Beispiele für Polyisocyanate sind polymeres MDI (P-MDI), Triphenylmethantriisocanat oder aber Trimerisate (Biurethe oder Isocyanurate) der oben genannten Diisocyanate.

Schließlich können als vierte Prepolymerkomponente auch noch monomere Alkohole (P4) eingesetzt werden. Diese können über eine aber auch über mehrere Hydroxylgruppen verfügen. Hinsichtlich der Molmasse und des Verzweigungsgrades der Alkohole (P4) gibt es keinerlei Beschränkungen.

Bevorzugt werden als Alkohole (P4) Verbindungen der allgemeinen Formel (5)

R⁵OH (5)

eingesetzt, wobei R⁵ die bei der allgemeinen Formel (3) angegebene Bedeutung aufweist. Diese Alkohole bilden bei der Synthese der Prepolymere (P) durch eine Reaktion mit den Di-oder Polyisocyanaten (P3) Kettentermini der allgemeinen Formel (3).

Vorzugsweise werden alle Prepolymerkomponenten in einem Mengenverhältnis eingesetzt, nach dem auf 1 Isocyanatgruppe vorzugsweise mindestens 0,6, besonders bevorzugt mindestens 0,8 und vorzugsweise höchstens 1,4, insbesondere höchstens 1,2 isocyanatreaktive Gruppen kommen.

Das Reaktionsprodukt ist bevorzugt isocyanatfrei. Die Reihenfolge, in denen die Komponenten (P1) bis (P4) miteinander zur Reaktion gebracht werden ist dabei beliebig.

Bei einem besonders bevorzugten Herstellverfahren für die Prepolymere (P) werden die oben genannten Polyole oder Polyolmischungen (P1) mit einem Di- oder Polyisocyanat (P3') eingesetzt. Dabei können dieselben isocyanatfunktionellen Verbindungen eingesetzt werden, die oben bereits als Isocyanate (P3) beschreiben worden sind. Die Isocyanate (P3') werden dabei im Überschuss eingesetzt, so dass ein isocyanatterminiertes "Zwischenprepolymer" (ZW) erhalten wird.

Dieses "Zwischenprepolymer" (ZW) wird dann in einem zweiten Reaktionsschritt mit einem isocyanatreaktiven Silan (P2') umgesetzt, das ausgewählt wird aus Silanen der allgemeinen Formeln (6)

B-(CH₂)_{y}-SiR²₃₋ₓ(OR¹)ₓ (6),

wobei B eine isocyanatreaktive Gruppe, vorzugsweise eine Hydroxylgruppe oder besonders bevorzugt eine Aminogruppe der Formel NHR³ darstellt und x, y, R¹, R² und R³ die oben angegebenen Bedeutungen aufweisen.

Die Reihenfolge der Syntheseschritte ist dabei prinzipiell auch austauschbar. So kann der erste Syntheseschritt prinzipiell auch in einer Reaktion des Isocyanates (P3') mit dem Silan (P2') bestehen und die Reaktion mit dem Polyol (P1) erst im zweiten Reaktionsschritt stattfinden. Ebenso ist es denkbar, beide Reaktionsschritte gleichzeitig durchzuführen. Auch diese Reaktionen können sowohl diskontinuierlich als auch kontinuierlich durchgeführt werden.

Schließlich können auch hier monomere Alkohole (P4') als vierte Prepolymerkomponente mit in das Polymer (P) eingebaut werden. Die Alkohole (P4') können über eine aber auch über mehrere Hydroxylgruppen verfügen. Hinsichtlich der Molkülmasse und des Verzweigungsgrades der Alkohole (P4') gibt es keinerlei Beschränkungen.

Bevorzugt werden als Alkohole (P4') Verbindungen der oben genannten allgemeinen Formel (5) eingesetzt. Es resultieren Prepolymere (P), deren Kettenenden nicht ausschließlich silanterminiert sind, sondern auch über einen gewissen Anteil, vorzugsweise mindestens 2%, besonders bevorzugt mindestens 4% und vorzugsweise höchstens 40%, insbesondere höchstens 20% an Kettenenden der allgemeinen Formel (3) verfügen.

Die Alkohole (P4') können dabei in einem separaten Reaktionsschritt in die Prepolymere (P) eingebaut werden, z.B. vor oder nach der Reaktion der Polyole (P1) mit den Isocyanaten (P3'). Alternativ kann der Einbau aber auch gleichzeitig mit einem anderen Reaktionsschritt erfolgen, z.B. indem eine Mischung aus den Polyolen (P1) und den Alkoholen (P4') mit den Isocyanaten (P3') zur Reaktion gebracht wird.

Vorzugsweise werden dabei Alkohole (P4'), Mischungen verschiedener Alkoholen (P4') oder aber Mischungen aus Polyolen (P1) und Alkoholen (P4') eingesetzt, die bei Raumtemperatur flüssig sind und dementsprechend einfach zu der Reaktionsmischung zudosiert werden können.

Auch bei diesem zweiten bevorzugten Herstellverfahren für die Prepolymere (P) werden alle Prepolymerkomponenten in einem Mengenverhältnis eingesetzt, nach dem auf 1 Isocyanatgruppe vorzugsweise mindestens 0,6, besonders bevorzugt mindestens 0,8 und vorzugsweise höchstens 1,4, insbesondere höchstens 1,2 isocyanatreaktive Gruppen kommen. Das Reaktionsprodukt ist bevorzugt isocyanatfrei.

Beispiele für Silane (S) sind n-Octyltrimethoxysilan, i-Octyltrimethoxysilan, n-Octyltriethoxysilan, i-Octyltriethoxysilan, die diversen Stereoisomere des Nonyltrimethoxysilan, Decyltrimethoxysilan, Undecyltrimethoxysilan, Dodecyltrimethoxysilan, Tridecyltrimethoxysilan, Tetradecyltrimethoxysilan, Pentadecyltrimethoxysilan, Hexadecyltridecyltrimethoxysilan, Heptadecyltrimethoxysilan, Octadecyltrimethoxysilan, Nonadecyltrimethoxysilan sowie die korrespondierenden Triethoxysilane. Besonders bevorzugt wird n-Hexadecyltrimethoxysilan.

Beider Formulierung der Zusammensetzung (K) werden auf 100 Teile Prepolymer (P) vorzugsweise mindestens 5, besonders bevorzugt mindestens 10 und vorzugsweise höchstens 50, insbesondere höchstens 40 Teile Silan (S) eingesetzt. Bei einem besonders bevorzugten Herstellverfahren für die Zusammensetzungen (K) sind die Silane (S) sowie gegebenenfalls weitere verdünnend wirkende aber nicht isocyanatreaktive Klebstoffkomponenten bereits während einiger oder gegebenenfalls sogar sämtlicher Syntheseschritte der Prepolymere (P) zugegen. So wird das Prepolymer (P) direkt in Form einer Mischung mit möglichst niedriger Viskosität erhalten.

Die Zusammensetzungen (K) enthalten vorzugsweise auch Härtungskatalysatoren (HK). Zudem können sie von den Silanen (S) abweichende Wasserfänger und Silanvernetzer (WS), Füllstoffe (F), Weichmacher (W), Haftvermittler (H), Rheologiehilfsmittel (R) und Stabilisatoren (S), gegebenenfalls zusätzlich auch noch Farbpigmente sowie weitere übliche Hilf-und Zusatzstoffe enthalten.

Als Härtungskatalysatoren (HK) können dabei beispielsweise Titanatester, wie Tetrabutyltitanat, Tetrapropyltitanat, Tetraisopropyltitanat, Tetraacetylacetonat-titanat; Zinnverbindungen, wie Dibutylzinndilaurat, Dibutylzinnmaleat, Dibutylzinndiacetat, Dibutylzinndioctanoat, Dibutylzinnacetylacetonat, Dibutytzinnoxid, oder entsprechende Verbindungen des Dioctylzinn, basische Katalysatoren, z.B. Aminosilane wie Aminopropyltrimethoxysilan, Aminopropyltriethoxysilan, Aminopropyl-methyldimethoxysilan, Aminopropyl-methyldiethoxysilan, N-(2-Aminoethyl)-aminopropyltrimethoxysilan, N-(2-Aminoethyl)-aminopropyltrimethoxysilan, N-(2-Aminoethyl)-aminopropyltriethoxysilan, N-(2-Aminoethyl)-aminopropyl-methyldimethoxysilan, N-Cyclohexylaminomethyltriethoxysilan, N-Cyclohexylaminomethyl-methyldiethoxysilan, N-Cyclohexylaminomethyltrimethoxysilan, N-Cyclohexylaminomethyl-methyldimethoxysilan und andere organische Amine, wie Triethylamin, Tributylamin, 1,4-Diazabicyclo[2,2,2]octan, N,N-Bis-(N,N-dimethyl-2-aminoethyl)-methylamin, N,N-Dimethylcyclohexylamin, N,N-Dimethyl-phenlyamin, N-Ethylmorpholinin oder saure Katalysatoren, wie Phosphorsäure- bzw. Phosphorsäureester, Toluolsulfonsäuren, Mineralsäuren dienen, wobei schwermetallfreie Katalysatoren bevorzugt werden.

Auf 100 Teile Prepolymer (P) werden vorzugsweise mindestens 0,01 Teile, besonders bevorzugt mindestens 0,05 Teile und vorzugsweise höchstens 10 Teile, insbesondere höchstens 1 Teil Härtungskatalysatoren (HK) eingesetzt. Die verschiedenen Katalysatoren können sowohl in reiner Form als auch als Mischungen verwendet werden.

Einen weiteren besonders bevorzugten Additivtyp für die Zusammensetzung (K) stellen Alkohole (A) der allgemeinen Formel (7)

R⁶OH (7)

dar, wobei
- **R⁶**: einen unsubstituierten oder halogensubstuierten Kohlenwannerotoffrest mit 1-20 Kohlenstoffatomen oder durch nicht benachbarte Sauerstoffatome unterbrochene Kohlenwasaerstoffrest mit insgesamt 2-20 Kohlenstoffatomen bedeutet.

Vorzugsweise handelt es sich bei dem Rest R⁶ um einen Alkylrest mit 1-8 Kohlenstoffatomen und besonders bevorzugt um Methyl-, Ethyl-, Isopropyl-, Propyl-, Butyl-, Isobutyl-, tert-Butyl-, Pentyl-, Cyclopentyl-, Isopenty-, tert-Butyl-, Hexyl- oder Cyclohexylreste. Besonders geeignete Alkohole (A) sind Ethanol und Methanol.

So wurde gefunden, das der Zusatz von Alkoholen (A) zu den Zusammensetzungen (K) deren Viskosität auch bei nur sehr kleinen Zusatzmengen massiv erniedrigt. Die Viskositätsabnahme ist dabei deutlich stärker als dies bei Zusätzen anderer niedermolekularer Verbindungen und/oder Lösungsmittel der Fall ist. Zudem führt der Zusatz der Alkohole (A) zu einer überraschenden Verbesserung der nach dem europäischen Standard DIN EN 204, Beanspruchungsgruppe D4 bestimmbaren Klebfestigkeit. Dies gilt insbesondere für die Klebfestigkeit nach Wasserlagerungen.

Bei der Formulierung der Zusammensetzung (K) werden auf 100 Teile Prepolymer (P) höchstens 30 Teile, bevorzugt höchstens 15 Teile und besonders bevorzugt höchstens 5 Teile Alkohol (A) eingesetzt. Werden Alkohole (A) eingesetzt, so werden vorzugsweise mindestens 0,5 Teile und besonders bevorzugt mindestens 1 Teil Alkohol (A) auf 100 Teile Prepolymer (P) eingesetzt.

Als Wasserfänger und Silanvernetzer (WS) können beispielsweise Vinylsilane wie Vinyltrimethoxy-, Vinyltriethoxy-, Vinylmethyldimethoxy-, Glycidoxypropyltrimethoxysilan, Glycidoxypropyltriethoxysilan, O-Methylcarba-matomethylmethyldimethoxysilan, O-Methylcarbamatomethyl-trimethoxysilan, O-Ethylcarbamatomethyl-methyldiethoxysilan, O-Ethylcarbamatomethyl-triethoxysilan, allgemein Alkylalkoxysilane oder aber auch weitere organofunktionelle Silane dienen. Selbstverständlich können hier auch dieselben Aminosilane eingesetzt werden, die bereits bei den Kondensationskatalysatoren (KK) beschrieben worden sind. Diese Silane nehmen dann oft eine Doppelfunktion als Katalysator und Vernetzersilan ein. Sämtlichen Silanvernetzer (S) - insbesondere sämtliche Silane mit Amino- oder Glycidoxyfunktionen - können zudem auch als Haftvermittler fungieren.

Besonders bevorzugt werden als *N*-Cyclohexlaminoalkylsilane wie 3-(N-Cyclohexlamino)-propyl-trimethoxysilan, 3-(*N*-Cyclo-hexlamino)-propyl-triethoxysilan oder - besonders bevorzugt - N-Cyclohexlaminomethyl-trimethoxysilan, *N*-Cyclohexlaminomethyltriethoxysilan, *N*-Cyclohexlaminomethyl-methyldimethoxysilan, *N*-Cyclohexlaminomethyl-methyldiethoxysilan eingesetzt. Diese Silane zeigen einen überraschend großen viskositätserniedrigenden Effekt auf die resultierenden Zusammensetzungen (K).

Auf 100 Teile Prepolymer (P) werden vorzugsweise 0 bis 20 Teile, besonders bevorzugt 0 bis 4 Teile Wasserfänger und Silanvernetzer (WS) eingesetzt.

Als Füllstoffe (F) können beispielsweise Calciumcarbonate in Form von natürlichen gemahlenen Kreiden, gemahlenen und beschichteten Kreiden, gefällten Kreiden, gefällten und beschichteten Kreiden, Tonmineralien, Bentonite, Kaoline, Talkum, Titandioxide, Aluminiumoxide, Aluminiumtrihydrat, Magnesiumoxid, Magnesiumhydroxid, Ruße, gefällte oderpyrogene, hydrophile oder hydrophobe Kieselsäuren dienen. Bevorzugtwerden Calciumcarbonate und gefällte oder pyrogene, hydrophile oder hydrophobe Kieselsäuren, besonders bevorzugt pyrogene, hydrophile oder hydrophobe Kieselsäuren, insbesondere pyrogene, hydrophile Kieselsäuren als Füllstoff (F) verwendet.

Auf 100 Teile Prepolymer (P) werden vorzugsweise 0 bis 200 Teile, besonders bevorzugt 0 bis 100 Teile Füllstoffe (F) eingesetzt.

Als Weichmacher (W) können beispielsweise Phthalatester, wie Dioctylphthalat, Diisooctylphthalat, Diundecylphthalat, Adipinsäureester, wie Dioctyladipat, Benzoesäureester, Glycolester, Phosphorsäureester, Sulfonsäureester, Polyester, Polyether, Polystyrole, Polybutadiene, Polyisobutene, paraffinische Kohlenwasserstoffe und höhere, verzweigte Kohlenwasserstoffe dienen.

Auf 100 Teile Prepolymer (P) werden vorzugsweise 0 bis 100 Teile, besonders bevorzugt 0 bis 50 Teile Weichmacher (W) eingesetzt.

Beispiele für Haftvermittler (H) sind Silane und Organopolysiloxane mit funktionellen Gruppen, wie beispielsweise solche mit Glycidoxypropyl-, Aminopropyl-, Aminoethylaminpropyl-, Ureidopropyl-oder Methacryloxypropylresten. Falls jedoch bereits eine andere Komponente, wie etwa der Härtungskatalysator (HK) oder der Wasserfänger und Silanvernetzer (WS), die genannten funktionellen Gruppen aufweist, kann auf einen Zusatz von Haftvermittler (H) auch verzichtet werden.

Als Rheologieadditive (R) können z.B. Thixotropiermittel eingesetzt werden. Beispielhaft genannt seien hier hydrophile pyrogene Kieselsäuren, beschichtete pyrogene Kieselsäuren, gefällte Kieselsäuren, Polyamidwache, hydrierte Ricinusöle, Stearatsalze oder gefällte Kreiden. Auch die o.g. Füllstoffe können zur Einstellung der Fließeigenschaften benutzt werden.

Auf 100 Teile Prepolymer (P) werden vorzugsweise 0 bis 10 Teile, besonders bevorzugt 0 bis 5 Teile Thixotropiermittel eingesetzt.

Als Stabilisatoren (S) können beispielsweise Antioxidantien oder Lichtschutzmittel, wie sogenannte HALS-Stabilisatoren, sterisch gehinderte Phenole, Thioether oder Benzotriazolderivate verwendet werden.

Zudem kann die Zusammensetzung (K) auch noch weitere Additive, z.B. Lösungsmittel, Fungizide, Biozide, Flammschutzmittel und Pigmente enthalten.

Die Zusammensetzungen (K) sind nach dem Aushärten sehr zugscherfest. Sie werden vorzugsweise als Klebstoffe (K) und vorzugsweise für Verklebungen eingesetzt, die nach dem Aushärten eine Zugscherfestigkeit von mindestens 7 mPa, bevorzugt mindestens 8 mPa und besonders bevorzugt mindestens 10 mPa aufweisen. Bevorzugt werden sie zum Verkleben von Holz eingesetzt, d.h. bei Verklebungen, bei denen mindestens eines der zu verklebenden Substrate - vorzugsweise beide zu verklebenden Substrate - aus Holz sind. Die Klebstoffe (K) sind dabei zum Verkleben jedweder Holztypen geeignet. Besonders bevorzugt werden sie für Verklebungen eingesetzt die nach der Aushärtung die DIN EN 204 D1-, D2-, D3- und/oder D4-Normen erfüllen.

Alle vorstehenden Symbole der vorstehenden Formeln weisen ihre Bedeutungen jeweils unabhängig voneinander auf. In allen Formeln ist das Siliciumatom vierwertig.

In den folgenden Beispiele sind, soweit nicht anders angegeben, alle Mengen- und Prozentangaben auf das Gewicht bezogen, alle Drücke 0,10 MPa (abs.) und alle Temperaturen 20°C.

### Beispiele

### Beispiel 1 (Prepolymer ohne Hexadecyltrimethoxysilan) :

In einem 500 ml Reaktionsgefäß mit Rühr-, Kühl- und Heizmöglichkeiten werden 109,8 g (630,5 mmol) Toluen-2,4-diisocyanat (TDI) vorgelegt und auf 60 °C erwärmt. Dann wird eine Mischung aus 20,7 g (85,4) mmol Hexadecylalkohol und 124,8 g (293,6 mmol) eines Polypropylenglycols mit einer mittleren Molmasse von 425 g/mol zugegeben. Die Temperatur der Reaktionsmischung sollte dabei nicht über 80 °C ansteigen. Anschließend wird für 60 min bei 60 °C nachgerührt.

Anschließend kühlt man auf etwa 50 °C ab und gibt 7,5 ml Vinyltrimethoxysilan hinzu. Danach werden 0,42 g Jeffcat^{®} DMDLS der Fa. Huntsman und 120,0 g (567,8 mmol) N-Phenylaminomethylmethyldimethoxysilan (GENIOSIL^{®} XL 972 der Wacker Chemie AG) hinzugegeben, wobei die Temperatur nicht auf über 80 °C steigen sollte. Danach wird für weitere 60 min bei 60 °C nachgerührt. In der resultierenden Prepolymermischung lassen sich IR-spektroskopisch keine Isocyanatgruppen mehr nachweisen, Man erhält eine klare, durchsichtige Prepolymermischung, die bei 50°C eine Viskosität von 13, 5 Pas aufweist. Sie lässt sich problemlos weiterverarbeiten,

### Beispiel 2 (Prepolymer mit Hexadecyltrimethoxysilan) :

In einem 500 ml Reaktionsgefäß mit Rühr-, Kühl- und Heizmöglichkeiten werden 109,8 g (630,5 mmol) Toluen-2,4-diisocyanat (TDI) und 47,0 g Hexadecyltrimethoxysilan vorgelegt und auf 60 °C erwärmt. Dann wird eine Mischung aus 20,7 g (85,4) mmol Hexadecylalkohol und 124,8 g (293,6 mmol) eines Polypropylenglycols mit einer mittleren Molmasse von 425 g/mol zugegeben. Die Temperatur der Reaktionsmischung sollte dabei nicht über 80 °C ansteigen. Anschließend wird für 60 min bei 60 °C nachgerührt.

Anschließend kühlt man auf etwa 50 °C ab und gibt 0,42 g Jeffcat^{®} DMDLS der Fa, Huntsman und 120,0 g (567,8 mmol) N-Phenylaminomethyl-methyldimethoxysilan (GENIOSIL^{®} XL 972 der Wacker Chemie AG) hinzu, wobei die Temperatur nicht auf über 80 °C steigen sollte. Danach wird für weitere 60 min bei 60 °C nachgerührt. In der resultierenden Prepolymermischung lassen sich IR-spektroskopisch keine Isocyanatgruppen mehr nachweisen. Man erhält eine klare, durchsichtige Prepolymermischung, die bei Raumtemperatur eine Viskosität von 10 Pas aufweist. Sie lässt sich problemlos weiterverarbeiten.

### Beispiel 3 (Prepolymer mit Hexadecyltrimethoxysilan und Vinyltrimethoxysilan) :

In einem 500 ml Reaktionsgefäß mit Rühr-, Kühl- und Heizmöglichkeiten werden 109,8 g (630,5 mmol) Toluen-2,4-diisocyanat (TDI) und 47,0 g Hexadecyltrimethoxysilan vorgelegt und auf 60 °C erwärmt. Dann wird eine Mischung aus 20,7 g (85,4) mmol Hexadecylalkohol und 124,8 g (293,6 mmol) eines Polypropylenglycols mit einer mittleren Molmasse von 425 g/mol zugegeben. Die Temperatur der Reaktionsmischung sollte dabei nicht über 80 °C ansteigen. Anschließend wird für 60 min bei 60 °C nachgerührt.

Anschließend kühlt man auf etwa 50 °C ab und gibt 7,5 ml Vinyltrimethoxysilan hinzu. Danach werden 0,42 g Jeffcat^{®} DMDLS der Fa. Huntsman und 120,0 g (567,8 mmol) N-Phenylaminomethylmethyldimethoxysilan (GENIOSIL^{®} XL 972 der Wacker Chemie AG) hinzugegeben, wobei die Temperatur nicht auf über 80 °C steigen sollte. Danach wird für weitere 60 min bei 60 °C nachgerührt. In der resultierenden Prepolymermischung lassen sich IR-spektroskopisch keine Isocyanatgruppen mehr nachweisen. Man erhält eine klare, durchsichtige Prepolymermischung, die bei Raumtemperatur eine Viskosität von 9 Pas aufweist. Sie lässt sich problemlos weiterverarbeiten.

### Beispiel 4 (Prepolymer mit Hexadecyltrimethoxysilan und Vinyltrimethoxysilan):

In einem 500 ml Reaktionsgefäß mit Rühr-, Kühl- und Heizmöglichkeiten werden 109,8 g (630,5 mmol) Toluen-2,4-diisocyanat (TDI) und 47,0 g Hexadecyltrimethoxysilan vorgelegt und auf 60 °C erwärmt. Dann wird eine Mischung aus 20,7 g (85,4) mmol Hexadecylalkohol und 124,8 g (293,6 mmol) eines Polypropylenglycols mit einer mittleren Molmasse von 425 g/mol zugegeben. Die Temperatur der Reaktionsmischung sollte dabei nicht über 80 °C ansteigen. Anschließend wird für 60 min bei 60 °C nachgerührt.

Anschließend kühlt man auf etwa 50 °C ab und gibt 7,5 ml Vinyltrimethoxysilan hinzu. Danach werden 0,42 g Jeffcat^{®} DMDLS der Fa. Huntsman und 145,0 g (567,8 mmol) 3-(N-Phenylamino)-propyl-trimethoxysilan hinzugegeben, wobei die Temperatur nicht auf über 80 °C steigen sollte. Danach wird für weitere 60 min bei 60 °C nachgerührt. In der resultierenden Prepolymermischung lassen sich IR-spektroskopisch keine Isocyanatgruppen mehr nachweisen. Man erhält eine klare, durchsichtige Prepolymermischung, die bei Raumtemperatur eine Viskosität von 15 Pas aufweist. Sie lässt sich problemlos weiterverarbeiten.

### Beispiel 5 (Herstellung einer 1 K-Klebstoffformulierung aus oben genannten Prepolymeren)

88,9 g Prepolymer aus Beispiel 1, 10,0 g Hexadecyltrimethoxysilan und 1,1 g 3-Aminopropyltrimethoxysilan (GENIOSIL^{®} GF 96 der Wacker Chemie AG) werden in einem geeigneten Mischgerät zusammengerührt. Man erhält einen gelblichen Klebstoff mit einer Viskosität von 80 Pas (Brookfield, Spindel 7, 20 min⁻¹). Mit diesem Klebstoff werden Buchenhölzer wie in der DIN EN 204 beschrieben verklebt und die Zugscherfestigkeiten bestimmt. Dabei werden für diese Formulierung folgenden Werte erzielt:

| Beanspruchungsgruppe | Klebfestigkeit N/mm² |
|---|---|
| D1 (Lagerungsfolge 1) | 10,6 |
| D2 (Lagerungsfolge 2) | 8,9 |
| D3 (Lagerungsfolge 3) | 3,0 |
| D3 (Lagerungsfolge 4) | 8,6 |
| D4 (Lagerungsfolge 5) | 3,1 |

### Beispiel 6 (Herstellung einer 1K-Klebstoffformulierung aus oben genannten Prepolymeren)

86,5 g Prepolymer aus Beispiel 1, 10,0 g Hexadecyltrimethoxysilan, 1,25 g 3-Glycidoxypropyltrimethoxysilan (GENIOSIL^{®} GF 80 der Wacker Chemie AG) und 2,25 g 3-Aminopropyltrimethoxysilan (GENIOSIL^{®} GF 96 der Wacker Chemie) werden in einem geeigneten Mischgerät zusammengerührt. Man erhält einen gelblichen Klebstoff mit einer Viskosität von 75 Pas (Brookfield, Spindel 7, 20 min⁻¹). Mit diesem Klebstoff werden Buchenhölzer wie in der DIN EN 204 beschrieben verklebt und die Zugscherfestigkeiten bestimmt. Dabei werden für diese Formulierung folgenden Werte erzielt:

| Beanspruchungsgruppe | Klebfestigkeit N/mm² |
|---|---|
| | |
| D1 (Lagerungsfolge 1) | 15,3 |
| D2 (Lagerungsfolge 2) | 9,0 |
| D3 (Lagerungsfolge 3) | 3,3 |
| D3 (Lagerungsfolge 4) | 9,1 |
| D4 (Lagerungsfolge 5) | 4,7 |

### Beispiel 7 (Herstellung einer 1K-Klebstoffformulierung aus oben genannten Prepolymeren)

86,25 g Prepolymer aus Beispiel 1, 10,0 g Hexadecyltrimethoxysilan, 2,5 g Isooctyltrimethoxysilan (Silan IO-Trimethoxy der Wacker Chemie AG) und 2,25 g 3-Aminopropyltrimethoxysilan (GENIOSIL^{®} GF 96 der Wacker Chemie AG) werden in einem geeigneten Mischgerätzusammengerührt. Man erhält einen gelblichen Klebstoff mit einer Viskosität von 78 Pas (Brookfield, Spindel 7, 20 min⁻¹). Mit diesem Klebstoff werden Buchenhölzer wie in der DIN EN 204 beschrieben verklebt und die Zugscherfestigkeiten bestimmt. Dabei werden für diese Formulierung folgenden Werte erzielt:

| Beanspruchungsgruppe | Klebfestigkeit N/mm² |
|---|---|
| | |
| D1 (Lagerungsfolge 1) | 14,0 |
| D2 (Lagerungsfolge 2) | 8,5 |
| D3 (Lagerungsfolge 3) | 3,2 |
| D3 (Lagerungsfolge 4) | 8,8 |
| D4 (Lagerungsfolge 5) | 4,6 |

### Beispiel 8 (Herstellung einer 1K-Klebstoffformulierung aus oben genannten Prepolymeren)

98,9 g Prepolymer aus Beispiel 2 und 1,1 g 3-Aminopropyltrimethoxysilan (GENTOSIL^{®} GF 96 der Wacker Chemie AG) werden in einem geeigneten Mischgerät zusammengerührt. Man erhält einen gelblichen Klebstoff mit einer Viskosität von 81 Pas (Brookfield, Spindel 7, 20 min⁻¹). Mit diesem Klebstoff werden Buchenhölzer wie in der DIN EN 204 beschrieben verklebt und die Zugscherfestigkeiten bestimmt. Dabei werden fürdiese Formulierung folgenden Werte erzielt:

| Beanspruchungsgruppe | Klebfestigkeit N/mm² |
|---|---|
| | |
| D1 (Lagerungsfolge 1) | 11,0 |
| D2 (Lagerungsfolge 2) | 8,7 |
| D3 (Lagerungsfolge 3) | 3,2 |
| D3 (Lagerungsfolge 4) | 9,1 |
| D4 (Lagerungsfolge 5) | 3,5 |

### Beispiel 9 (Herstellung einer 1K-Klebstoffformulierung aus oben genannten Prepolymeren)

96,5 g Prepolymer aus Beispiel 2, 1,25 g 3-Glycidoxypropyltrimethoxysilan (GENIOSIL^{®} GF 80 der Wacker Chemie AG) und 2,25 g 3-Aminopropyltrimethoxysilan (GENIOSIL^{®} GF 96 der Wacker Chemie AG) werden in einem geeigneten Mischgerät zusammengerührt. Man erhält einen gelblichen Klebstoff mit einer Viskosität von 76 Pas (Brookfield, Spindel 7, 20 min⁻¹). Mit diesem Klebstoff werden Buchenhölzer wie in der DIN EN 204 beschrieben verklebt und die Zugscherfestigkeiten bestimmt. Dabei werden für diese Formulierung folgenden Werte erzielt:

| Beanspruchungsgruppe | Klebfestigkeit N/mm² |
|---|---|
| | |
| D1 (Lagerungsfolge 1) | 15,0 |
| D2 (Lagerungsfolge 2) | 9,1 |
| D3 (Lagerungsfolge 3) | 3,5 |
| D3 (Lagerungsfolge 4) | 9,5 |
| D4 (Lagerungsfolge 5) | 4,5 |

### Beispiel 10 (Herstellung einer 1K-Klebstoffformulierung aus oben genannten Prepolymeren)

96,25 g Prepolymer aus Beispiel 2, 2,5 g Isooctyltrimethoxysilan (Silan IO-Trimethoxy der Wacker Chemie AG) und 2,25 g 3-Amino-propyltrimethoxysilan (GENIOSIL^{®} GF 96 der Wacker Chemie AG) werden in einem geeigneten Mischgerät zusammengerührt. Man erhält einen gelblichen Klebstoff mit einer Viskosität von 79 Pas (Brookfield, Spindel 7, 20 min⁻¹). Mit diesem Klebstoff werden Buchenhölzer wie in der DIN EN 204 beschrieben verklebt und die Zugscherfestigkeiten bestimmt. Dabei werden für diese Formulierung folgenden Werte erzielt:

| Beanspruchungsgruppe | Klebfestigkeit N/mm² |
|---|---|
| | |
| D1 (Lagerungsfolge 1) | 14,1 |
| D2 (Lagerungsfolge 2) | 8,3 |
| D3 (Lagerungsfolge 3) | 3,4 |
| D3 (Lagerungsfolge 4) | 8,9 |
| D4 (Lagerungsfolge 5) | 4,4 |

### Beispiel 11 (Herstellung einer 1K-Klebstoffformulierung aus oben genannten Prepolymeren)

98,9 g Prepolymer aus Beispiel 3 und 1,1 g 3-Aminopropyltrimethoxysilan (GENIOSIL^{®} GF 96 der Wacker Chemie AG) werden in einem geeigneten Mischgerät zusammengerührt. Man erhält einen gelblichen Klebstoff mit einer Viskosität von 80 Pas (Brookfield, Spindel 7, 20 min⁻¹). Mit diesem Klebstoff werden Buchenhölzer wie in der DIN EN 204 beschrieben verklebt und die Zugscherfestigkeiten bestimmt. Dabei werden für diese Formulierung folgenden Werte erzielt:

| Beanspruchungsgruppe | Klebfestigkeit N/mm² |
|---|---|
| | |
| D1 (Lagerungsfolge 1) | 10,4 |
| D2 (Lagerungsfolge 2) | 8,6 |
| D3 (Lagerungsfolge 3) | 3,1 |
| D3 (Lagerungsfolge 4) | 8,5 |
| D4 (Lagerungsfolge 5) | 3,2 |

### Beispiel 12 (Herstellung einer 1K-Klebstoffformulierung aus oben genannten Prepolymeren)

96,5 g Prepolymer aus Beispiel 3, 1,25 g 3-Glycidoxypropyltrimethoxysilan (GENIOSIL^{®} GF 80 der Wacker Chemie AG) und 2,25 g 3-Aminopropyltrimethoxysilan (GENIOSIL^{®} GF 96 der Wacker Chemie AG) werden in einem geeigneten Mischgerät zusammengerührt. Man erhält einen gelblichen Klebstoff mit einer Viskosität von 74 Pas (Brookfield, Spindel 7, 20 min⁻¹). Mit diesem Klebstoff werden Buchenhölzer wie in der DIN EN 204 beschrieben verklebt und die Zugscherfestigkeiten bestimmt. Dabei werden für diese Formulierung folgenden Werte erzielt:

| Beanspruchungsgruppe | Klebfestigkeit N/mm² |
|---|---|
| | |
| D1 (Lagerungsfolge 1) | 15,6 |
| D2 (Lagerungsfolge 2) | 9,3 |
| D3 (Lagerungsfolge 3) | 3,5 |
| D3 (Lagerungsfolge 4) | 9,5 |
| D4 (Lagerungsfolge 5) | 4,7 |

### Beispiel 13 (Herstellung einer 1K-Klebstoffformulierung aus oben genannten Prepolymeren)

96,25 g Prepolymer aus Beispiel 3, 2,5 g Isooctyltrimethoxysilan (Silan IO-Trimethoxy der Wacker Chemie AG) und 2,25 g 3-Amino-propyltrimethoxysilan (GENIOSIL^{®} GF 96 der Wacker Chemie AG) werden in einem geeigneten Mischgerät zusammengerührt. Man erhält einen gelblichen Klebstoff mit einer Viskosität von 77 Pas (Brookfield, Spindel 7, 20 min⁻¹). Mit diesem Klebstoff werden Buchenhölzer wie in der DIN EN 204 beschrieben verklebt und die Zugscherfestigkeiten bestimmt. Dabei werden für diese Formulierung folgenden Werte erzielt:

| Beanspruchungsgruppe | Klebfestigkeit N/mm² |
|---|---|
| | |
| D1 (Lagerungsfolge 1) | 14,1 |
| D2 (Lagerungsfolge 2) | 8,6 |
| D3 (Lagerungsfolge 3) | 3,3 |
| D3 (Lagerungsfolge 4) | 8,9 |
| D4 (Lagerungsfolge 5) | 4,4 |

### Beispiel 14 (Herstellung einer 1K-Klebstoffformulierung aus oben genannten Prepolymeren)

97,5 g Prepolymer aus Beispiel 4 und 2,5 g 3-Aminopropyltrimethoxysilan (GENIOSIL^{®} GF 96 der Wacker Chemie AG) werden in einem geeigneten Mischgerät zusammengerührt. Man erhält einen gelblichen Klebstoff mit einer Viskosität von 120 Pas (Brookfield, Spindel 7, 20 min⁻¹). Mit diesem Klebstoff werden Buchenhölzer wie in der DIN EN 204 beschrieben verklebt und die Zugscherfestigkeiten bestimmt. Dabei werden für diese Formulierung folgenden Werte erzielt:

| Beanspruchungsgruppe | Klebfestigkeit N/mm² |
|---|---|
| | |
| D1 (Lagerungsfolge 1) | 14,8 |
| D2 (Lagerungsfolge 2) | 10,9 |
| D3 (Lagerungsfolge 3) | 4,3 |
| D3 (Lagerungsfolge 4) | 9,6 |
| D4 (Lagerungsfolge 5) | 4,7 |

### Beispiel 15 (Herstellung einer 1 K-Klebstoffformulierung aus oben genannten Prepolymeren)

58,6 g Prepolymer aus Beispiel 1, 38,9 g Prepolymer aus Beispiel 4 und 2,5 g 3-Aminopropyltrimethoxysilan (GENIOSIL^{®} GF 96 der Wacker Chemie AG) werden in einem geeigneten Mischgerät zusammengerührt. Man erhält einen gelblichen Klebstoff mit einer Viskosität von 100 Pas (Brookfield, Spindel 7, 20 min⁻¹). Mit diesem Klebstoff werden Buchenhölzer wie in der DIN EN 204 beschrieben verklebt und die Zugscherfestigkeiten bestimmt. Dabei werden für diese Formulierung folgenden Werte erzielt:

| Beanspruchungsgruppe | Klebfestigkeit N/mm² |
|---|---|
| | |
| D1 (Lagerungsfolge 1) | 12,6 |
| D2 (Lagerungsfolge 2) | 9,6 |
| D3 (Lagerungefolge 3) | 3,7 |
| D3 (Lagerungsfolge 4) | 9,1 |
| D4 (Lagerungsfolge 5) | 4,3 |

### Beispiel 16 (Herstellung einer 1K-Klebstoffformulierung aus oben genannten Prepolymeren)

69,9 g Prepolymer aus Beispiel 1, 7,8 g Hexadecyltrimethoxysilan, 20,0 g Ethanol und 2,3 g 3-Aminopropyltrimethoxysilan (GENIOSIL^{®} GF 96 der Wacker Chemie AG) werden in einem geeigneten Mischgerät zusammengerührt. Man erhält einen gelblichen Klebstoff mit einer Viskosität von 0,3 Pas (Brookfield, Spindel 1, 20 min⁻¹). Mit diesem Klebstoff werden Buchenhölzer wie in der DIN EN 204 beschrieben verklebt und die Zugscherfestigkeiten bestimmt. Dabei werden für diese Formulierung folgenden Werte erzielt:

| Beanspruchungsgruppe | Klebfestigkeit N/mm² |
|---|---|
| | |
| D1 (Lagerungsfolge 1) | 16,6 |
| D2 (Lagerungsfolge 2) | 10,1 |
| D3 (Lagerungsfolge 3) | 4,7 |
| D3 (Lagerungsfolge 4) | 9,6 |
| D4 (Lagerungsfolge 5) | 5,7 |

### Beispiel 17 (Herstellung einer 1 K-Klebstoffformulierung aus oben genannten Prepolymeren)

83,4 g Prepolymer aus Beispiel 1, 9,3 g Hexadecyltrimethoxysilan, 5,0 g Ethanol und 2,3 g 3-Aminopropyltri-methoxysilan (GENIOSIL^{®} GF 96 der Wacker Chemie AG) werden in einem geeigneten Mischgerät zusammengerührt. Man erhält einen gelblichen Klebstoff mit einer Viskosität von 10 Pas (Brookfield, Spindel 5, 20 min⁻¹). Mit diesem Klebstoff werden Buchenhölzer wie in der DIN EN 204 beschrieben verklebt und die Zugscherfestigkeiten bestimmt. Dabei werden für diese Formulierung folgenden Werte erzielt:

| Beanspruchungsgruppe | Klebfestigkeit N/mm² |
|---|---|
| | |
| D1 (Lagerungsfolge 1) | 14,2 |
| D2 (Lagerungsfolge 2) | 9,8 |
| D3 (Lagerungsfolge 3) | 4,2 |
| D3 (Lagerungsfolge 4) | 8,9 |
| D4 (Lagerungsfolge 5) | 4,9 |

## Patentansprüche

1. Zusammensetzungen (K), enthaltend
A) 100 Gewichtsteile eines Prepolymers (P), das in seinem Rückgrat Einheiten (E) enthält, die ausgewählt werden aus Polyether- und Polyestereinheiten, wobei das Prepolymer (P) mindestens eine Endgruppe der allgemeinen Formel (1) aufweist
-L¹-(CH₂)_{y}-SiR²₃₋ₓ(OR¹)ₓ (1),
B) 1 bis 100 Gewichtsteile Silan (S) der allgemeinen Formel (2)
R⁴SiR²_{3-z}(OR¹)_{z} (2),
C) 0 bis 10 Gewichtsteile eines Härtungskatalysator (HK) der die Aushärtung der Zusammensetzungen (K) in Gegenwart von Luftfeuchtigkeit beschleunigt,
D) als Wasserfänger und Silanvernetzer (WS) Vinylsilane, Glycidoxypropyltrimethoxysilan, Glycidoxypropyltriethoxysilan, O-Methylcarbamatomethylmethyldimethoxysilan, O-Methylcarbamatomethyltrimethoxysilan, O-Ethylcarbamatomethyl-methyldiethoxysilan oder O-Ethylcarbarnatomethyl-triethoxysilan,
wobei
L¹ eine zweibindige Bindegruppe ausgewählt aus -S-, -(R³)N-, -O-CO-N(R³)-, -N(R³)-CO-O-, -N(R³)-CO-NH-, -NH-CO-N(R³)-, -N(R³)-CO-N(R³)
R¹ und R² unsubstituierte oder halogensubstuierte Kohlenwasserstoffreste mit 1-6 Kohlenstoffatomen oder durch nicht benachbarte Sauerstoffatome unterbrochene Kohlenwasserstoffreste mit insgesamt 2-20 Kohlenstoffatomen,
R³ Wasserstoff, einen unsubstituierten oder halogensubstuierten cyclischen, linearen oder verzweigten C₁ bis C₁₈-Alkyl- oder Alkenylrest, einen C₆- bis C₁₈-Arylrest oder einen Rest der Formel - (CH₂)_{y}-SiR²₃₋ₓ(OR¹)ₓ,
R⁴ einen unsubstituierten oder halogensubstuierten linearen, verzweigten oder cyclischen Alkyl-, Alkenyl oder Arylalkylrest mit mindestens 7 Kohlenstoffatomen,
y eine Zahl von 1 bis 10,
x die Werte 2 oder 3 und
z die Werte 1, 2 oder 3 bedeuten.

2. Zusammensetzungen (K) nach Anspruch 1, bei denen die Prepolymere (P) aus Polyolen (P1), die ausgewählt werden aus Polyetherpolyolen, Polyesterpolyolen oder Mischungen aus verschiedenen Polyether- und/oder Polyesterpolyolen, hergestellt worden sind, wobei die Polyole (P1) bzw. Polyolmischungen (P1) eine mittlere Molmasse von höchstens 2000 Dalton aufweisen.

3. Zusammensetzungen (K) nach Anspruch 1 oder 2, bei denen die Prepolymere (P) neben den Silantermini der allgemeinen Formel (1) auch Termini der allgemeinen Formel (3)
L²-R⁵ (3),
besitzen, wobei
R⁵ einen unsubstituierten oder halogensubstuierten linearen, verzweigten oder cyclischen Alkyl-, Alkenyl oder Arylalkylrest mit mindestens 7 Kohlenstoffatomen bedeuten und
L² dieselbe Bedeutung aufweist wie L¹ gemäss Anspruch 1.

4. Zusammensetzungen (K) nach Anspruch 3, bei denen 2 bis 40% der Kettenenden der Prepolymere (P) aus Termini der allgemeinen Formel (3) bestehen.

5. Zusammensetzungen (K) nach Anspruch 1 bis 4, bei denen R⁴ ein linearer oder verzweigten Alkyl- oder Alkenylrest mit mindestens 8 Kohlenstoffatomen bedeutet.

6. Zusammensetzungen (K) nach Anspruch 1 bis 5, bei denen auf 100 Teile Prepolymer (P) mindestens 5 Teile Silan (S) eingesetzt werden.

7. Zusammensetzungen (K) nach Anspruch 1 bis 6, bei denen der Härtungskatalysator (HK) ausgewählt wird aus Titanatestern, Zinnverbindungen, basischen und sauren Verbindungen.

8. Zusammensetzungen (K) nach Anspruch 1 bis 7, bei denen auf 100 Teile Prepolymer (P) mindestens 0,01 Teile Härtungskatalysatoren (HK) eingesetzt werden.

9. Zusammensetzungen (K) nach Anspruch 1 bis 8, welche Alkohol (A) der allgemeinen Formel (7)
R⁶OH (7)
enthalten, wobei
R⁶ einen unsubstituierten oder halogensubstuierten Kohlenwasserstoffreste mit 1-20 Kohlenstoffatomen oder durch nicht benachbarte Sauerstoffatome unterbrochene Kohlenwasserstoffreste mit insgesamt 2-20 Kohlenstoffatomen bedeutet.

10. Verwendung der Zusammensetzungen (K) nach Anspruch 1 bis 9 als Klebstoffe.

## Claims

1. Compositions (K) comprising
A) 100 parts by weight of a prepolymer (P) comprising in its backbone units (E) selected from polyether units and polyester units, the prepolymer (P) having at least one end group of the general formula (1)
-L¹-(CH₂)_{y}-SiR²₃₋ₓ(OR¹)ₓ (1),
B) 1 to 100 parts by weight of silane (S) of the general formula (2)
R⁴SiR²_{3-z}(OR¹)_{z} (2),
C) 0 to 10 parts by weight of a curing catalyst (HK) which accelerates the curing of the compositions (K) in the presence of atmospheric moisture,
D) as water scavenger and silane crosslinker (WS) vinylsilanes, glycidyloxypropyltrimethoxysilane, glycidyloxypropyltriethoxysilane, O-methylcarbamatomethylmethyldimethoxysilane, O-methylcarbamatomethyltrimethoxysilane, O-ethylcarbamatomethylmethyldiethoxysilane or O-ethylcarbamatomethyltriethoxysilane,
where
L¹ is a divalent linking group selected from -S-, -(R³)N-, -O-CO-N(R³)-, -N(R³)-CO-O-, -N(R³)-CO-NH-, -NH-CO-N(R³)-, -N(R₃)-C_{O}-N(R₃),
R¹ and R² are unsubstituted or halogen-substituted hydrocarbon radicals having 1-6 carbon atoms, or hydrocarbon radicals interrupted by nonadjacent oxygen atoms and having a total of 2-20 carbon atoms,
R³ is hydrogen, an unsubstituted or halogen-substituted cyclic, linear or branched C₁ to C₁₈ alkyl or alkenyl radical, a C₆ to C₁₈ aryl radical or a radical of the formula (CH₂)_{y}-SiR²₃₋ₓ(OR¹)ₓ,
R⁴ is an unsubstituted or halogen-substituted linear, branched or cyclic alkyl, alkenyl or arylalkyl radical having at least 7 carbon atoms,
y is a number from 1 to 10,
x is the value 2 or 3, and
z is the value 1, 2 or 3.

2. Compositions (K) according to Claim 1, wherein the prepolymers (P) have been prepared from polyols (P1) selected from polyether polyols, polyester polyols or mixtures of different polyether and/or polyester polyols, the polyols (P1) or polyol mixtures (P1) having an average molar mass of not more than 2000 daltons.

3. Compositions (K) according to Claim 1 or 2, wherein the prepolymers (P) as well as the silane termini of the general formula (1) also possess termini of the general formula (3)
L²-^{_}R⁵ (3),
where
R⁵ is an unsubstituted or halogen-substituted linear, branched or cyclic alkyl, alkenyl or arylalkyl radical having at least 7 carbon atoms, and
L² has the same definition as L¹ according to Claim 1.

4. Compositions (K) according to Claim 3, wherein 2 to 40% of the chain ends of the prepolymers (P) consist of termini of the general formula (3).

5. Compositions (K) according to Claim 1 to 4, wherein R⁴ is a linear or branched alkyl or alkenyl radical having at least 8 carbon atoms.

6. Compositions (K) according to Claim 1 to 5, wherein at least 5 parts of silane (S) are used per 100 parts of prepolymer (P).

7. Compositions (K) according to Claim 1 to 6, wherein the curing catalyst (HK) is selected from titanate esters, tin compounds, and basic and acidic compounds.

8. Compositions (K) according to Claim 1 to 7, wherein at least 0.01 part of curing catalyst (HK) is used per 100 parts of prepolymer (P).

9. Compositions (K) according to Claim 1 to 8 comprising alcohol (A) of the general formula (7)
R⁶OH (7),
where
R⁶ is an unsubstituted or halogen-substituted hydrocarbon radicals having 1-20 carbon atoms or is hydrocarbon radicals interrupted by nonadjacent oxygen atoms and having a total of 2-20 carbon atoms.

10. Use of the compositions (K) according to Claim 1 to 9 as adhesives.

## Revendications

1. Compositions (K), contenant
A) 100 parties en poids d'un prépolymère (P) qui contient dans son squelette des motifs (E) qui sont choisis parmi des motifs polyéther et polyester, le prépolymère (P) comportant au moins un groupe terminal de formule générale (1)
-L¹-(CH₂)_{y}-SiR²₃₋ₓ(OR¹)ₓ (1),
B) 1 à 100 parties en poids d'un silane (S) de formule générale (2)
R⁴SiR²_{3-z}(OR¹)_{z} (2),
C) 0 à 10 parties en poids d'un catalyseur de durcissement (HK) qui accélère le durcissement des compositions (K) en présence d'humidité de l'air,
D) en tant que capteurs d'eau et agents de réticulation de type silane (WS), des vinylsilanes, le glycidoxypropyltriméthoxysilane, le glycidoxypropyltriéthoxysilane, l'O-méthylcarbamatométhyl-méthyldiméthoxysilane, l'O-méthylcarbamatométhyl-triméthoxysilane, l'O-éthylcarbamatométhyl-méthyldiéthoxysilane ou l'O-éthylcarbamatométhyl triéthoxysilane,
L¹ représentant un groupe de liaison à deux liaisons, choisi parmi -S-, -(R³)N-, -O-CO-N(R₃)-, -N(R³)-CO-O-, -N(R³)-CO-NH-, -NH-CO-N(R³)-, -N(R3)-CO-N(R₃)
R¹ et R² représentant des radicaux hydrocarbonés non substitués ou substitués par halogène, ayant de 1 à 6 atomes de carbone, ou des radicaux hydrocarbonés ayant au total de 2 à 20 atomes de carbone, interrompus par des atomes d'oxygène non contigus,
R³ représentant un atome d'hydrogène, un radical alkyle ou alcényle en C₁-C₁₈ cyclique, linéaire ou ramifié, non substitué ou substitué par halogène, un radical aryle en C₆-C₁₈ ou un radical de formule - (CH₂)_{y}-SiR²₃₋ₓ(OR¹)ₓ,
R⁴ représentant un radical alkyle, alcényle ou arylalkyle linéaire, ramifié ou cyclique, non substitué ou substitué par halogène, ayant au moins 7 atomes de carbone,
y représentant un nombre valant de 1 à 10,
x valant 2 ou 3 et
z valant 1, 2 ou 3.

2. Compositions (K) selon la revendication 1, dans lesquelles les prépolymères (P) ont été préparés à partir de polyols (P1) qui sont choisis parmi des polyétherpolyols, des polyesterpolyols ou des mélanges de divers polyéther- et/ou polyesterpolyols, les polyols (P1) ou mélanges de polyols (P1) ayant une masse moléculaire moyenne d'au maximum 2 000 daltons.

3. Compositions (K) selon la revendication 1 ou 2, dans lesquelles les prépolymères (P) possèdent, en plus des terminaisons silane de formule générale (1), également des terminaisons de formule générale (3)
L²-R⁵ (3),
R⁵ représentant un radical alkyle, alcényle ou arylalkyle linéaire, ramifié ou cyclique, non substitué ou substitué par halogène, ayant au moins 7 atomes de carbone et
L² ayant la même signification que L¹ selon la revendication 1.

4. Compositions (K) selon la revendication 3, dans lesquelles 2 à 40 % des extrémités de chaîne des prépolymères (P) consistent en terminaisons de formule générale (3).

5. Compositions (K) selon l'une quelconque des revendications 1 à 4, dans lesquelles R⁴ représente un radical alkyle ou alcényle linéaire ou ramifié ayant au moins 8 atomes de carbone.

6. Compositions (K) selon l'une quelconque des revendications 1 à 5, dans lesquelles on utilise au moins 5 parties de silane (S) pour 100 parties de prépolymère (P).

7. Compositions (K) selon l'une quelconque des revendications 1 à 6, dans lesquelles le catalyseur de durcissement (HK) est choisi parmi des esters de titanate, des composés d'étain, des composés basiques et acides.

8. Compositions (K) selon l'une quelconque des revendications 1 à 7, dans lesquelles on utilise au moins 0,01 partie de catalyseurs de durcissement (HK) pour 100 parties de prépolymère (P).

9. Compositions (K) selon l'une quelconque des revendications 1 à 8, qui contiennent un alcool (A) de formule générale (7)
R⁶OH (7)
R⁶ représentant un radicaux hydrocarboné non substitué ou substitué par halogène, ayant de 1 à 20 atomes de carbone ou un radicaux hydrocarboné ayant au total de 2 à 20 atomes de carbone, interrompu par des atomes d'oxygène non contigus.

10. Utilisation des compositions (K) selon l'une quelconque des revendications 1 à 9, en tant qu'adhésifs.
